# EUROPEAN PATENT APPLICATION

(11) **EP 2 660 288 A1**
(43) Date of publication of application: **06.11.2013**
(21) Application number: 10861394.4
(22) Date of filing: 30.12.2010
(51) Int. Cl.: C08L 61/06, C08K 3/00

(54) **PLATE SYNTHESIZED BY WASTE CIRCUIT BOARD POWDER AND MANUFACTURING PROCESS THEREOF**

(71) Applicant: Foshan Wep Environmental Protection Technology Co., Ltd., Foshan, Guangdong 528143 (CN)
(72) Inventor: XIAO, Chaofeng, Guangdong 528143 (CN)
(74) Representative: Ter Meer Steinmeister & Partner
(86) International application number: PCT/CN2010/080524
(87) International publication number: WO 2012/088694

(57) **Abstract**

Plate synthesized by waste circuit board powder and the manufacturing process thereof are provided. The material used for manufacturing the plate includes: powder recycled from circuit board, wood fiber powder, crosslinker, waterproof agent and carbon filament fiber. The manufacturing process includes the following steps: drying the powder recycled from circuit board at a constant temperature; processing the high-fiber auxiliary materials into wood fiber powder with a particle size of over 80 mesh, drying and then stirring the wood fiber powder to obtain carbon fiber powder; adding processing agents and mixing uniformly again; charging the mixed material into a paving system, pressing, placing, repressing and then relieving pressure. The plate has good processing properties, high water resistance, high fire resistance and high static bending strength.

## Description

### FIELD OF THE INVENTION

The present invention relates to an eco-friendly plate, particularly to a zero-carbon high-fiber eco-friendly plate synthesized from waste circuit board powder. The present invention also relates to a process of manufacturing the zero-carbon high-fiber eco-friendly plate synthesized from waste circuit board powder.

### BACKGROUND OF THE INVENTION

Raw materials used for making traditional wood plates are forest woods, and deforestations are thus required to obtain these woods, which results in water loss and soil erosion, and has adverse influences on the natural environment and ecological balance, therefore, traditional wood plates are not eco-friendly or energy-saving. This kind of wood plate emits great amounts of formaldehyde, it is also prone to swelling, deformation, bending and going mouldy when wet, besides, it is not resistant to corrosion, acid or alkali, and is flammable.

Large amounts of building materials are needed due to the rapid development of cities around the world, and decorative plates used in industry and construction include wooden deck, wooden plywood, low/medium/high density board, particle board and wood plates, actually none of them utilizes renewable resource recycling technology, and it therefore requires large-scale deforestation, causing excessive deforestation and waste of timber resources. Excessive destruction of ecological environment disorders the ecological balance all over the world, incurs natural disasters such as frequent earthquakes, debris flow, floods, droughts, snow disasters and sand-dust storms, and results in global climate warming and serious environmental pollution. Excessive deforestation breaks the ecological balance, incurs water loss and soil erosion and worsens the environment, which in turn leads to a sharp rise in raw material prices in wood products. Renewable wood resources, for example, crop straws produced in local agricultural production and bamboo/wood saw dust, are not efficiently utilized since they are usually landfilled or burned, which is not eco-friendly and it also goes against the implementation of Low-Carbon Development.

### SUMMARY OF THE INVENTION

An object of this invention is to provide a zero-carbon high-fiber eco-friendly plate and a manufacturing process thereof, the plate is renewable and it synthesized from waste circuit board powder and renewable wood resource.

The technical solutions of the present invention are as follows: a process of manufacturing a zero-carbon high-fiber eco-friendly plate synthesized from waste circuit board powder, characterized in that, the process comprises the steps of:
(a) sieving powder recycled from circuit board with a shaker and attracting metal residues with a magnet to avoid aggregation of raw material;
(b) drying the powder recycled from circuit board, stirring and drying the powder recycled from circuit board in a drying oven at a constant temperature of 125 °C, controlling water content in the powder recycled from circuit board not to exceed 3%;
(c) performing a coarse crushing on a high-fiber auxiliary material, then crushing and grinding to process the high-fiber auxiliary material into wood fiber powder with a particle size of over 80 mesh, drying at a temperature of over 100 °C, controlling the water content in the powder at a value between 2% and 4%; stirring and mixing the wood fiber powder at 180 °C to obtain carbon fiber powder;
(d) mixing the powder recycled from circuit board and the carbon fiber powder at a certain ratio and stirring uniformly, adding processing agents at a certain ratio and mixing uniformly again; wherein the processing agents comprise a crosslinking agent, a waterproofing agent and a carbon filament fiber, the crosslinking agent is urea-formaldehyde resin sol or phenolic resin sol, the waterproofing agent is one or more selected from the group consisting of paraffin wax, silicone oil, white oil and palm wax;
(e) charging the mixed raw materials into a paving system with a constant speed, flattening the raw materials using a flattening roller, pressing the mixed raw materials after they are entered into a pre-press machine to form slabs having a uniform thickness, transporting the slabs using a conveying belt and then trimming vertically and horizontally, transporting plates to a multi-layer press to perform a molding pressing; pressing for 1 minute to make the pressure on the plate over 10 Mps, placing for 2 minutes followed by a repressing with the pressure of the repressing being over 14 Mps, pressing for 5 minutes followed by an air exhaust and a pressure relief process, with the pressure reduced gradually;
(f) pulling out the plates after pressing, overturning the plates and wind cooling;
(g) calibrating and sanding, quality testing and storing.

Preferably, the powder recycled from circuit board is a powdered material obtained by disassembly and grinding of waste circuit board or circuit board scrap, or the powder recycled from circuit board is directly recycled drilling powder of circuit board.

Preferably, the high-fiber auxiliary material is crop straw, wood saw dust or bamboo saw dust.

Preferably, in the step (e) a laminated board of the multi-layer press is heated by circulated heat transfer oil, and the heat transfer oil of the laminated board has a temperature controlled between 150°C and 190°C.

In order to provide the renewable eco-friendly plate, the present invention provides the following technical solutions: a zero-carbon high-fiber eco-friendly plate synthesized from waste circuit board powder, characterized in that, raw material of the eco-friendly plate for pressing comprises: 1-69 parts of powder recycled from circuit board, 1-70 parts of wood fiber powder, 1-20 parts of a crosslinking agent, 1-10 parts of a waterproofing agent and 1-12 parts of a carbon filament fiber, based on weight ratio.

Preferably, the raw material of the eco-friendly plate for pressing comprises: 50-69 parts of the powder recycled from circuit board, 10-20 parts of the wood fiber powder, 5-10 parts of the crosslinking agent, 1-2 parts of the waterproofing agent and 5-8 parts of the carbon filament fiber, based on weight ratio.

Preferably, the raw material of the eco-friendly plate for pressing comprises: 1-69 parts of the powder recycled from circuit board, 1-70 parts of the wood fiber powder, 1-20 parts of the crosslinking agent, 1-10 parts of the waterproofing agent, 1-8 parts of a fireproofing agent, 1-5 parts of a formaldehyde catching agent, 1-12 parts of the carbon filament fiber, 1-5 parts of a hardening agent and 1-5 parts of an antioxidant, based on weight ratio.

Preferably, the raw material of the eco-friendly plate for pressing comprises: 50-69 parts of the powder recycled from circuit board, 10-20 parts of the wood fiber powder, 5-10 parts of the crosslinking agent, 2-3 parts of the waterproofing agent, 1-3 parts of the fireproofing agent, 2-3 parts of the formaldehyde catching agent, 5-12 parts of the carbon filament fiber, 1.5-2 parts of the hardening agent and 1.5-2 parts of the antioxidant, based on weight ratio.

Preferably, the raw material of the eco-friendly plate for pressing comprises: 40-50 parts of the powder recycled from circuit board, 30-40 parts of the wood fiber powder, 13-20 parts of the crosslinking agent, 3-5 parts of the waterproofing agent, 3-5 parts of the fireproofing agent, 2-3 parts of the formaldehyde catching agent, 7-10 parts of the carbon filament fiber, 1.5-2 parts of the hardening agent and 1.5-2 parts of the antioxidant, based on weight ratio.

Preferably, the crosslinking agent is urea-formaldehyde resin sol or phenolic resin sol, the waterproofing agent is one or more selected from the group consisting of paraffin wax, silicone oil, white oil and palm wax, the fireproofing agent is one or more selected from the group consisting of ammonium chloride, potassium carbonate and ammonium dihydrogen phosphate, the formaldehyde catching agent is one or more selected from the group consisting of montmorillonite, melamine and phenol, the carbon filament fiber is a glass fiber, the hardening agent is one or more selected from the group consisting of ammonium chloride, oxalic acid, phenolic aldehyde amine, polyether amine and arylated alkyl amine, the antioxidant is one or more selected from the group consisting of arylated alkyl amine antioxidant, phenolic antioxidant, thioester and phosphite ester.

The beneficial effects of the present invention are given as following. The process of manufacturing a zero-carbon high-fiber environmental-friendly plate synthesized from waste circuit board powder comprises the step of: mixing the waste circuit board powder with the wood fiber powder produced from various straw, wood saw dust or bamboo saw dust, then adding a variety of additives for the synthesis and fully mixing these materials. After that the mixture will be pressed by a strong pressure to produce waterproof, fireproof, anti-swelling, anti-deformation, anti-bend, mould-proof, corrosion-resistant, acid-resistant and alkali-resistant zero-carbon high-fiber environmental-friendly plate whose formaldehyde emission complies with relevant safety standards. In this way, it achieves the purpose of recycling various waste materials to produce the plates, avoiding excessive deforestation, and being beneficial for maintenance and restoration of the natural environment and ecological balance, reducing natural disasters, stabling plates price, and further achieving the effect of low-carbon energy saving.

The zero-carbon high-fiber environmental-friendly plate synthesized from waste circuit board powder of present invention is made by the following steps: mixing the waste circuit board powder with the wood fiber powder produced from various straw, wood saw dust or bamboo saw dust, then adding a variety of additives for the synthesis and fully mixing these materials. After that the mixture will be pressed by a strong pressure to produce waterproof, fireproof, anti-swelling, anti-deformation, anti-bend, mould-proof, corrosion-resistant, acid-resistant and alkali-resistant zero-carbon high-fiber environmental-friendly plate whose formaldehyde emission complies with relevant safety standards. In this way, it achieves the purpose of recycling various waste materials to produce the plates, avoiding excessive deforestation, and being beneficial for maintenance and restoration of the natural environment and ecological balance, reducing natural disasters, stabling plates price, and further achieving the effect of low-carbon energy saving. The plate of the present invention can be planed, nailed and sawed like wood, which is convenient for processing and renewable recycled used. It also correspondingly improves the internal and external stress tolerance of the plate due to the adding of chopped carbon fiber, and increases the impact strength, static strength and static bending strength of the plate.

### DETAILED DESCRIPTION OF THE PREFERRED EMBODIMENTS OF THE

### INVENTION

Detailed description of the preferred embodiments of the present invention is as follows.

In the present invention, the process of manufacturing a zero-carbon high-fiber eco-friendly plate synthesized from waste circuit board powder comprises the steps of:
(a) sieving powder recycled from circuit board with a shaker and attracting metal residues with a magnet to avoid aggregation of raw material;
(b) drying the powder recycled from circuit board, stirring and drying the powder recycled from circuit board in a drying oven at a constant temperature of 125 °C to fully blend the materials, controlling water content in the powder recycled from circuit board not to exceed 3%; wherein the drying process is preferably conducted in an agitated dryer, and the stirring process is preferably performed in a speed increasing manner (from low speed initially to high speed later) so as to obtain a homogeneous mixture;
(c) performing a coarse crushing on a high-fiber auxiliary material, then crushing and grinding to process the high-fiber auxiliary material into wood fiber powder with a particle size of over 80 mesh, drying at a temperature of over 100 °C, controlling the water content in the powder at a value between 2% and 4%; stirring and mixing the wood fiber powder at 180 °C to obtain carbon fiber powder; wherein the stirring can be conducted in a high-speed mixer so as to obtain carbon fiber powder that is easy to be mixed and crosslinks with other substances easily to form the plate, besides, the powder obtained in this manner has a better flexibility; in addition, waterproofing agent and fireproofing agent can be added during stirring, high temperature burning can thus be prevented and the wood fiber powder can thus be pre-mixed via the waterproofing agent, such that the wood fiber powder can be protected from water and fire;
(d) mixing the powder recycled from circuit board and the carbon fiber powder at a certain ratio and stirring uniformly, adding processing agents at a certain ratio and mixing uniformly again; wherein the processing agents comprise a crosslinking agent, a waterproofing agent and a carbon filament fiber, the crosslinking agent is urea-formaldehyde resin sol or phenolic resin sol, the waterproofing agent is one or more selected from the group consisting of paraffin wax, silicone oil, white oil and palm wax; the main raw materials are fully mixed prior to the adding of processing agents, in this way, the homogeneous main raw materials ensure a tight crosslinking reaction; as for these processing agents, the waterproofing agent can be added in advance, such that an outside covering can be formed on the high-fiber material;
(e) charging the mixed raw materials into a paving system with a constant speed, flattening the raw materials using a flattening roller, pressing the mixed raw materials after they are entered into a pre-press machine to form slabs having a uniform thickness, transporting the slabs using a conveying belt and then trimming vertically and horizontally, transporting plates to a multi-layer press to perform a molding pressing; pressing for 1 minute to make the pressure on the plate over 10 Mps, placing for 2 minutes followed by a repressing with the pressure of the repressing being over 14 Mps, pressing for 5 minutes followed by an air exhaust and a pressure relief process, with the pressure reduced gradually; wherein the pressurization is a step-by-step process rather than a one-step process, which facilitates the interactions among ingredients of the plate, besides it provides buffering time for the interaction; pressure maintaining is also provided during the pressurization, which prolongs the crosslinking reaction and leads to the production of stable plates; similarly, the pressure relief is also a step-by-step process, because external pressures and internal pressures of the plate might be inconsistent due to a sharply reduced pressure, the gradually reduced pressure can avoid many plate deficiencies, such as cracking, invisible cracking, inconsistent partial performance and lamination, therefore, the homogeneity, stability and durability of the plate of the present invention is further improved;
(f) pulling out the plates after pressing, overturning the plates, cooling by wind and performing other regular procedures for making plates.
(g) calibrating and sanding the plates, testing quality and storing the resultant plates.

Preferably, the powder recycled from circuit board is a powdered material obtained by disassembly and grinding of waste circuit board or circuit board scrap, or the powder recycled from circuit board is directly recycled drilling powder of circuit board.

Wherein the processing agents can also include a fireproofing agent, a formaldehyde catching agent, a hardening agent and an antioxidant; the fireproofing agent is one or more selected from the group consisting of ammonium chloride, potassium carbonate and ammonium dihydrogen phosphate, the formaldehyde catching agent is one or more selected from the group consisting of montmorillonite, melamine and phenol, the hardening agent is one or more selected from the group consisting of ammonium chloride, oxalic acid, phenolic aldehyde amine, polyether amine and arylated alkyl amine, the antioxidant is one or more selected from the group consisting of arylated alkyl amine antioxidant, phenolic antioxidant, thioester and phosphite ester.

As the global electronic industry developed, the system of recycling old electrical appliances was gradually established. Places built up the recycle centers to dismantle the appliances and then to recycle the plastic and metal from the appliances. The harmful objects were handed to relevant department and rest of PCBs would be buried under the ground. However, this way is not scientific enough. Electronic industry produces large amount of circuit board scraps, most of the scraps are burned for extracting cooper, or the scraps are smashed for metal, then the residues are cleaned up or buried. Besides, copper clad laminates and drilling powders from the electronic industry are also cleaned up or buried. This can generate large amount of electronic trash, only in China, which is over 500 million tons waste circuit boards, circuit board powder is thermoset resin powder which is not easy to degrade therefore directly abandoning or burying does not match the requirement of saving energy. In the present invention, circuit boards both from discarded appliances and industry wastes are recycled, after crushing and extracting metal via electrostatic separation, the residual circuit board powder can be used as a main component for making the plate of the present invention.

Preferably, the high-fiber auxiliary material is crop straw, wood saw dust or bamboo saw dust.

There is a large amount of production of straw in China, which is several hundred million tons, involving corn straw, wheat straw, rice straw, bagasse and others. Under the support of polices all over world to farm, APEC members, in order to protect regional agricultural eco environment, cooperates technically with each other on the recycling of crop straws. China has large amounts of crop straws such as corn straw, cotton stalks, rice straw, wheat straw and bagasse, but these residues of crop are buried or burned instead of being used, producing carbon dioxide which is harmful to the environment, for example, it might incur climate warming and disrupts ecological balance. However, crop straw contains much wood fiber and can be recycled, wood fiber powder obtained by grinding the crop straw can be used as an ingredient for making plate.

Wood product industry (floor and furniture) and bamboo product industry generate much wood/bamboo saw dust from the production process but they are not effectively used again and are burned and buried. This not only wastes resources but also generates pollution. Nowadays, wood floor and laminated wood floor are popular but their life time is from 3 to 5 years. Because of the anti-fire layer pasted on the surface of floor, the floor cannot be burned but only buried when discarded, which increases environmental burdens. These discarded laminated floors can be grinded to wood powder with a particle size of over 80 mesh, i.e. wood fiber powder, and the powders can further be used as a filler for plates.

Using crop straws, wood saw dust or bamboo saw dust as the high-fiber auxiliary material can avoid harming the environment by recycling wastes, reduce the weight of plate and improve flexibility and strengthen of the plate, make the plate similar to wood, such that, the plate is able to be sawed, drilled, profiled processed and profiled pressed.

Preferably, in the step (e), a laminated board of the multi-layer press is heated by circulated heat transfer oil, and the heat transfer oil of the laminated board has a temperature controlled between 150°C and 190°C. This makes the laminated board keep a high temperature, and the use of flowing oil for heating makes sure every part of the laminated board being heated homogeneously, which avoids adverse influence on the production and quality of the plate caused by temperature difference.

In order to produce the zero-carbon high-fiber eco-friendly plate synthesized from waste circuit board powder of the present invention, raw material of the eco-friendly plate for pressing comprises: 1-69 parts of powder recycled from circuit board, 1-70 parts of wood fiber powder, 1-20 parts of a crosslinking agent, 1-10 parts of a waterproofing agent and 1-12 parts of a carbon filament fiber, based on weight ratio.

Preferably, the raw material of the eco-friendly plate for pressing comprises: 50-69 parts of the powder recycled from circuit board, 10-20 parts of the wood fiber powder, 5-10 parts of the crosslinking agent, 1-2 parts of the waterproofing agent and 5-8 parts of the carbon filament fiber, based on weight ratio.

The composite plate, which is made by mixing waste circuit board powder with the wood fiber powder produced from various straw, wood saw dust or bamboo saw dust, has high strength inherited from the circuit board and has good flexibility and low density inherited from the wood fiber powder. Therefore, the plate of the present invention has a light weight that reduces construction products' bearing capacity; the plate also has an improved static strength and static bending strength; in addition, the plate is easy to process and can be pressed to any shape.

Using powder recycled from waste circuit board and/or drilling powder of circuit board as main filling material is good for environment. Because circuit board (CCL and PCB) powder is manly consisted of epoxy and glass fiber, the plate made from the powder as an ingredient is waterproof, anti-deformation, anti-swelling, mould-proof, corrosion-resistant, acid-resistant and alkali-resistant, and has no formaldehyde emission, and can thus be recycled.

Adding carbonized wood fiber powder mixture can reduce the weight of plate, save the cost of logistics, improve the internal and external stress tolerance, enhance the static strength and static bending strength of the plate, widen the usability of the plate, the plate can thus be pressed to any bumpy texture that seems archaistic. Adding wood fiber powder mixture can provide the plate with fiber adhesive strength, this improves the elasticity of the plate, which facilitates post-processing of the plate.

The crosslinking agent is urea-formaldehyde resin sol or phenolic resin sol, the waterproof agent is one or more selected from the group consisting of paraffin wax, silicone oil, white oil and palm wax, the carbon filament fiber is a glass fiber.

The eco-friendly urea-formaldehyde resin sol or phenolic resin sol is used as the crosslinking agent for making the zero-carbon high-fiber eco-friendly plate synthesized from waste circuit board powder of the present invention. During the synthesis of the plate of the present invention, phenols (such as phenol, cresol and resorcinol) are reacted to enhance adhesive degree among the powders. Using molecular colloids as adhesive can avoid dispersion of the product, which further enhances the crosslinking reaction during the forming of the plate.

In the present invention, the waterproofing agent is one or more selected from the group consisting of paraffin wax, silicone oil, white oil and palm wax, preferably, the waterproofing agent is the emulsion of paraffin wax, this ingredient prevents the wood fiber and the circuit board of the high-fiber eco-friendly plate from water, which achieves the effect of anti-deformation when wet, mould-proof and corrosion-resistance.

Preferably, the raw material of the eco-friendly plate for pressing comprises: 1-69 parts of the powder recycled from circuit board, 1-70 parts of the wood fiber powder, 1-20 parts of the crosslinking agent, 1-10 parts of the waterproofing agent, 1-8 parts of a fireproofing agent, 1-5 parts of a formaldehyde catching agent, 1-12 parts of the carbon filament fiber, 1-5 parts of a hardening agent and 1-5 parts of an antioxidant, based on weight ratio.

Preferably, the raw material of the eco-friendly plate for pressing comprises: 50-69 parts of the powder recycled from circuit board, 10-20 parts of the wood fiber powder, 5-10 parts of the crosslinking agent, 2-3 parts of the waterproofing agent, 1-3 parts of the fireproofing agent, 2-3 parts of the formaldehyde catching agent, 5-12 parts of the carbon filament fiber, 1.5-2 parts of the hardening agent and 1.5-2 parts of the antioxidant, based on weight ratio.

Preferably, the raw material of the eco-friendly plate for pressing comprises: 40-50 parts of the powder recycled from circuit board, 30-40 parts of the wood fiber powder, 13-20 parts of the crosslinking agent, 3-5 parts of the waterproofing agent, 3-5 parts of the fireproofing agent, 2-3 parts of the formaldehyde catching agent, 7-10 parts of the carbon filament fiber, 1.5-2 parts of the hardening agent and 1.5-2 parts of the antioxidant, based on weight ratio.

Preferably, the fireproofing agent is one or more selected from the group consisting of ammonium chloride, potassium carbonate and ammonium dihydrogen phosphate, the formaldehyde catching agent is one or more selected from the group consisting of montmorillonite, melamine and phenol, the hardening agent is one or more selected from the group consisting of ammonium chloride, oxalic acid, phenolic aldehyde amine, polyether amine and arylated alkyl amine, the antioxidant is one or more selected from the group consisting of arylated alkyl amine antioxidant, phenolic antioxidant, thioester and phosphate eater.

In the present invention, the fireproofing agent is one or more selected from the group consisting of ammonium chloride, potassium carbonate and ammonium dihydrogen phosphate, optionally, phosphorus-nitrogen-boron-molybdenum-magne sium-zinc-aluminum composition can also be added as an fireproofing agent for the plate of the present invention, the fireproofing agent (i.e. fire retardant) is then homogeneous distributed on the surface of the fine fiber. The fire retardant produces acid and forms dehydrant when meets high temperature, and the flame retardant system will react violently as the temperature increased, producing water vapour and incombustible gas that also called fire retardant gas, at the same time, the system expands and foams, forming porous foam carbonized layer. Because the water vapor and incombustible gas can dilute concentrations of combustible substance of the plate, and the carbonized layer can further retard inflaming, prevent oxygen and prevent escape of degradation, the plate of the present invention might achieve an ideal flame retardant effect. Therefore, the fire resistant performance of the product can reach a level of Bfl. In order to effectively reduce smoke concentrations, smokeproofing agent can be added into the fireproofing agent.

In the present invention, the formaldehyde catching agent is one or more selected from the group consisting of montmorillonite, melamine and phenol. Because of the porous/adsorbent properties of the montmorillonite and the chemical properties of melamine or phenol, the smell of powder recycled from circuit board and the wood fiber powder could be effectively cleared off.

In the present invention, the carbon filament fiber is glass fiber, and the carbon filament fiber should be chopped carbon fiber whose length is 3 mm to 25 mm, which can increase the strength of the plate and strengthen the bearing capacity of the entire plate.

In the present invention, the hardening agent is one or more selected from the group consisting of ammonium chloride, oxalic acid, phenolic aldehyde amine, polyether amine and arylated alkyl amine, preferably, ammonium chloride is used. The hardening agent can accelerate the curing process, shorten the production cycle, and improve efficiency. The plate of the present invention can be applied to the next processing steps immediately as soon as it has been produced, in addition, the newly produced plate is not easy-breaking.

In the present invention, the antioxidant is one or more selected from the group consisting of arylated alkyl amine antioxidant, phenolic antioxidant, thioester and phosphite ester, preferably, phosphite ester is used. The antioxidant prevents plate's oxidation and aging resulted from the influence of climate and temperature during the long-time use.

In the present invention, the ingredients of the plate comprise E0 eco-friendly urea-formaldehyde resin sol or phenolic aldehyde resin sol, waterproofing agent, fireproofing agent, formaldehyde catching agent, chopped carbon fiber, hardening agent, antioxidant and stability composite additives (stability, dispersion, activity), these ingredients can improve compatibility and adhesive strength, enhance stability, avoid oxidation, give wood flavor, prevent fire and meet other requirements of decorative plate.

After performing lots of experiments, raw material and the amounts thereof for making the zero-carbon high-fiber eco-friendly plate synthesized from the waste circuit board powder of the present invention are as follows.

Example 1: the raw material of the high-fiber eco-friendly plate for pressing comprises: 1 part of the powder recycled from circuit board, 70 parts of the wood fiber powder, 20 parts of the urea-formaldehyde resin sol, 5 parts of the paraffin wax, and 12 parts of the carbon filament fiber, based on weight ratio.

Example 2: the raw material of the high-fiber eco-friendly plate for pressing comprises: 69 parts of the powder recycled from circuit board, 1 part of the wood fiber powder, 12 parts of the urea-formaldehyde resin sol, 8 parts of the paraffin wax, and 8 parts of the carbon filament fiber, based on weight ratio.

Example 3: the raw material of the high-fiber eco-friendly plate for pressing comprises: 69 parts of the powder recycled from circuit board, 70 parts of the wood fiber powder, 20 parts of the urea-formaldehyde resin sol, 10 parts of the paraffin wax, and 10 parts of the carbon filament fiber, based on weight ratio.

Example 4: the raw material of the high-fiber eco-friendly plate for pressing comprises: 30 parts of the powder recycled from circuit board, 70 parts of the wood fiber powder, 10 parts of the urea-formaldehyde resin sol, 10 parts of the paraffin wax, and 1 part of the carbon filament fiber, based on weight ratio.

Example 5: the raw material of the high-fiber eco-friendly plate for pressing comprises: 15 parts of the powder recycled from circuit board, 30 parts of the wood fiber powder, 1 part of the urea-formaldehyde resin sol, 1 part of the paraffin wax, and 1 part of the carbon filament fiber, based on weight ratio.

Example 6: the raw material of the high-fiber eco-friendly plate for pressing comprises: 50 parts of the powder recycled from circuit board, 20 parts of the wood fiber powder, 10 parts of the urea-formaldehyde resin sol, 2 parts of the paraffin wax, and 5 parts of the carbon filament fiber, based on weight ratio.

Example 7: the raw material of the high-fiber eco-friendly plate for pressing comprises: 69 parts of the powder recycled from circuit board, 10 parts of the wood fiber powder, 8 parts of the urea-formaldehyde resin sol, 2 parts of the paraffin wax, and 8 parts of the carbon filament fiber, based on weight ratio.

Example 8: the raw material of the high-fiber eco-friendly plate for pressing comprises: 69 parts of the powder recycled from circuit board, 20 parts of the wood fiber powder, 10 parts of urea-formaldehyde resin sol, 2 parts of the paraffin wax, and 5 parts of the carbon filament fiber, based on weight ratio.

Example 9: the raw material of the high-fiber eco-friendly plate for pressing comprises: 50 parts of the powder recycled from circuit board, 10 parts of the wood fiber powder, 5 parts of the urea-formaldehyde resin sol, 1 part of the paraffin wax, and 8 parts of the carbon filament fiber, based on weight ratio.

Example 10: the raw material of the high-fiber eco-friendly plate for pressing comprises: 60 parts of the powder recycled from circuit board, 16 parts of the wood fiber powder, 8 parts of the urea-formaldehyde resin sol, 1.5 parts of the paraffin wax, and 6 parts of the carbon filament fiber, based on weight ratio.

Example 11: the raw material of the high-fiber eco-friendly plate for pressing comprises: 69 parts of the powder recycled from circuit board, 1 part of the wood fiber powder, 20 parts of the phenolic aldehyde resin sol, 5 parts of the silicone oil, 1 part of ammonium chloride, 5 parts of the phenol, 1 part of the carbon filament fiber, 1 part of ammonium chloride, and 1 part of the phosphite ester, based on weight ratio.

Example 12: the raw material of the high-fiber eco-friendly plate for pressing comprises: 1 part of the powder recycled from circuit board, 70 parts of the wood fiber powder, 1 part of the phenolic aldehyde resin sol, 10 parts of the silicone oil, 8 parts of ammonium chloride, 1-5 parts of the phenol, 1-12 parts of the carbon filament fiber, 5 parts of ammonium chloride, and 5 parts of the phosphite ester, based on weight ratio.

Example 13: the raw material of the high-fiber eco-friendly plate for pressing comprises: 18 parts of the powder recycled from circuit board, 50 parts of the wood fiber powder, 10 parts of the phenolic aldehyde resin sol, 8 parts of the silicone oil, 5 parts of ammonium chloride, 3 parts of the phenol, 8 parts of the carbon filament fiber, 3.5 parts of ammonium chloride, and 3.5 parts of the phosphite ester, based on weight ratio.

Example 14: the raw material of the high-fiber eco-friendly plate for pressing comprises: 69 parts of the powder recycled from circuit board, 10 parts of the wood fiber powder, 5 parts of the phenolic aldehyde resin sol, 2 parts of the paraffin wax, 1 part of ammonium chloride, 2 parts of the phenol, 5 parts of the carbon filament fiber, 1.5 parts of ammonium chloride, and 1.5 parts of the phosphite ester, based on weight ratio.

Example 15: the raw material of the high-fiber eco-friendly plate for pressing comprises: 69 parts of the powder recycled from circuit board, 20 parts of the wood fiber powder, 10 parts of the phenolic aldehyde resin sol, 2 parts of the paraffin wax, 2 parts of ammonium chloride, 3 parts of the phenol, 5 parts of the carbon filament fiber, 2 parts of ammonium chloride, and 2 parts of the phosphite ester, based on weight ratio.

Example 16: the raw material of the high-fiber eco-friendly plate for pressing comprises: 50 parts of the powder recycled from circuit board, 20 parts of the wood fiber powder, 8 parts of the phenolic aldehyde resin sol, 2.5 parts of the paraffin wax, 3 parts of the ammonium chloride, 2 parts of the phenol, 8 parts of the carbon filament fiber, 1.8 parts of ammonium chloride, and 1.8 parts of the phosphite ester, based on weight ratio.

Example 17: the raw material of the high-fiber eco-friendly plate for pressing comprises: 60 parts of the powder recycled from circuit board, 15 parts of the wood fiber powder, 8 parts of the phenolic aldehyde resin sol, 3 parts of the paraffin wax, 3 parts of ammonium chloride, 2.5 parts of the phenol, 12 parts of carbon filament fiber, 2 parts of ammonium chloride, and 2 parts of the phosphite ester, based on weight ratio.

Example 18: the raw material of the high-fiber eco-friendly plate for pressing comprises: 40 parts of the powder recycled from circuit board, 30 parts of the wood fiber powder, 13 parts of the phenolic aldehyde resin sol, 5 parts of the paraffin wax, 5 parts of ammonium chloride, 2 parts of the phenol, 10 parts of the carbon filament fiber, 1.5 parts of ammonium chloride, and 1.5 parts of the phosphite ester, based on weight ratio.

Example 19: the raw material of the high-fiber eco-friendly plate for pressing comprises: 50 parts of the powder recycled from circuit board, 30 parts of the wood fiber powder, 16 parts of the phenolic aldehyde resin sol, 4 parts of the paraffin wax, 3 parts of ammonium chloride, 2 parts of the phenol, 7 parts of the carbon filament fiber, 1.8 parts of ammonium chloride, and 1.8 parts of the phosphite ester, based on weight ratio.

Example 20: the raw material of the high-fiber eco-friendly plate for pressing comprises: 50 parts of the powder recycled from circuit board, 40 parts of the wood fiber powder, 20 parts of the phenolic aldehyde resin sol, 3 parts of the paraffin wax, 4 parts of ammonium chloride, 3 parts of the phenol, 9 parts of the carbon filament fiber, 2 parts of ammonium chloride, and 2 parts of the phosphite ester, based on weight ratio.

Example 21: the raw material of the high-fiber eco-friendly plate for pressing comprises: 45 parts of the powder recycled from circuit board, 36 parts of the wood fiber powder, 20 parts of the phenolic aldehyde resin sol, 5 parts of the paraffin wax, 5 parts of ammonium chloride, 2.5 parts of the phenol, 8 parts of the carbon filament fiber, 2 parts of ammonium chloride, and 2 parts of the phosphite ester, based on weight ratio.

The plates made from the components mentioned in the above examples were tested for various parameters (according to national standard method), and the experimental data are as follows.

| | 24h Absorbent thickness expansion rate,% | 24h Water absorption rate, % | Static bending strength , Mpa | Bending elastic modulus, Mpa | Formaldehyde emission , mg/L |
|---|---|---|---|---|---|
| Standard value (high-class product) | ≤2.0 | ≤5.0 | ≥20 | ≥1800 | E0≤0.3 |
| Example 1 | 0.05 | 0.21 | 36 | 2900 | 0.18 |
| Example 2 | 0.01 | 0.05 | 43 | 2500 | 0.18 |
| Example 3 | 0.02 | 0.10 | 40 | 2700 | 0.16 |
| Example 4 | 0.01 | 0.05 | 38 | 2800 | 0.16 |
| Example 5 | 0.08 | 0.30 | 38 | 2750 | 0.15 |
| Example 6 | 0.04 | 0.18 | 40 | 2650 | 0.19 |
| Example 7 | 0.03 | 0.18 | 42 | 2800 | 0.20 |
| Example 8 | 0.05 | 0.22 | 42 | 2700 | 0.19 |
| Example 9 | 0.05 | 0.22 | 43 | 3000 | 0.21 |
| Example 10 | 0.05 | 0.15 | 42 | 2850 | 0.20 |
| Example 11 | 0.02 | 0.10 | 40 | 2500 | 0.15 |
| Example 12 | 0.02 | 0.12 | 38 | 2950 | 0.10 |
| Example 13 | 0.02 | 0.12 | 38 | 3100 | 0.15 |
| Example 14 | 0.04 | 0.22 | 40 | 2700 | 0.10 |
| Example 15 | 0.05 | 0.24 | 41 | 2850 | 0.09 |
| Example 16 | 0.03 | 0.16 | 42 | 2960 | 0.08 |
| Example 17 | 0.03 | 0.13 | 42 | 3150 | 0.08 |
| Example 18 | 0.02 | 0.08 | 36 | 3200 | 0.09 |
| Example 19 | 0.02 | 0.09 | 38 | 3100 | 0.09 |
| Example 20 | 0.02 | 0.12 | 42 | 3000 | 0.09 |
| Example 21 | 0.01 | 0.06 | 43 | 3250 | 0.08 |

In the above-mentioned examples, the urea-formaldehyde resin sol which was used as a crosslinking agent can be replaced with the phenolic aldehyde resin sol, because this replacement led to a performance difference less than 3.2% for the plates after repeated tests.

The paraffin wax or silicone oil used as a waterproofing agent in the above-mentioned examples can be replaced with one or more components selected from the group consisting of paraffin wax, silicone oil, white oil and palm wax, because this replacement led to a performance difference less than 3.5% for the plates after repeated tests.

The ammonium chloride used as a fireproofing agent in the above-mentioned examples can be replaced with potassium carbonate and/or ammonium dihydrogen phosphate, because this replacement led to a performance difference less than 5% for the plates after repeated tests.

The phenol used as a formaldehyde catching agent in the above-mentioned examples can be replaced with montmorillonite and/or melamine, because this replacement led to a performance difference less than 4% for the plates after repeated tests.

The carbon filament fiber is chopped glass fiber.

The ammonium chloride used as a hardening agent in the above-mentioned examples can be replaced with one or more components selected from the group consisting of oxalic acid, phenolic aldehyde amine, polyether amine and arylated alkyl amine, because this replacement led to a performance difference less than 3% for the plates after repeated tests.

The phosphite ester used as an antioxidant in the above-mentioned examples can be replaced with one or more components selected from the group consisting of arylated alkyl amine antioxidant, phenolic antioxidant and thioester, because this replacement led to a performance difference less than 3.6 % for the plates after repeated tests.

It is intended that the foregoing detailed description be regarded as illustrative rather than limiting, and that it be understood that it is the following claims, including all equivalents, that are intended to define the spirit and scope of this invention.

## Claims

1. A process of manufacturing a zero-carbon high-fiber eco-friendly plate synthesized from waste circuit board powder, **characterized in that**, the process comprises the steps of:
(a) sieving powder recycled from circuit board with a shaker and attracting metal residues with a magnet to avoid aggregation of raw material;
(b) drying the powder recycled from circuit board, stirring and drying the powder recycled from circuit board in a drying oven at a constant temperature of 125 °C, controlling water content in the powder recycled from circuit board not to exceed 3%;
(c) performing a coarse crushing on a high-fiber auxiliary material, then crushing and grinding to process the high-fiber auxiliary material into wood fiber powder with a particle size of over 80 mesh, drying at a temperature of over 100 °C, controlling the water content in the powder at a value between 2% and 4%; stirring and mixing the wood fiber powder at 180 °C to obtain carbon fiber powder;
(d) mixing the powder recycled from circuit board and the carbon fiber powder at a certain ratio and stirring uniformly, adding processing agents at a certain ratio and mixing uniformly again; wherein the processing agents comprise a crosslinking agent, a waterproofing agent and a carbon filament fiber, the crosslinking agent is urea-formaldehyde resin sol or phenolic resin sol, the waterproofing agent is one or more agent selected from the group consisting of paraffin wax, silicone oil, white oil and palm wax;
(e) charging the mixed raw materials into a paving system with a constant speed, flattening the raw materials using a flattening roller, pressing the mixed raw materials after they are entered into a pre-press machine to form slabs having a uniform thickness, transporting the slabs using a conveying belt and then trimming vertically and horizontally, transporting plates to a multi-layer press to perform a molding pressing; pressing for 1 minute to make the pressure on the plate over 10 Mps, placing for 2 minutes followed by a repressing with the pressure of the repressing being over 14 Mps, pressing for 5 minutes followed by an air exhaust and a pressure relief process, with the pressure reduced gradually;
(f) pulling out the plates after pressing, overturning the plates and wind cooling;
(g) calibrating and sanding, quality testing and storing.

2. The process of manufacturing a zero-carbon high-fiber eco-friendly plate synthesized from waste circuit board powder as claimed in claim 1, **characterized in that**, the powder recycled from circuit board is a powdered material obtained by disassembly and grinding of waste circuit board or circuit board scrap, or the powder recycled from circuit board is directly recycled drilling powder of circuit board.

3. The process of manufacturing a zero-carbon high-fiber eco-friendly plate synthesized from waste circuit board powder as claimed in claim 1, **characterized in that**, the high-fiber auxiliary material is crop straw, wood saw dust or bamboo saw dust.

4. The process of manufacturing a zero-carbon high-fiber eco-friendly plate synthesized from waste circuit board powder as claimed in claim 1, **characterized in that**, in the step (e) a laminated board of the multi-layer press is heated by circulated heat transfer oils, and the heat transfer oils of the laminated board has a temperature controlled between 150°C and 190°C.

5. A zero-carbon high-fiber eco-friendly plate synthesized from waste circuit board powder, **characterized in that**, raw material of the eco-friendly plate for pressing comprises: 1-69 parts of powder recycled from circuit board, 1-70 parts of wood fiber powder, 1-20 parts of a crosslinking agent, 1-10 parts of a waterproofing agent and 1-12 parts of a carbon filament fiber, based on weight ratio.

6. The zero-carbon high-fiber eco-friendly plate synthesized from waste circuit board powder as claimed in claim 5, **characterized in that**, the raw material of the eco-friendly plate for pressing comprises: 50-69 parts of the powder recycled from circuit board, 10-20 parts of the wood fiber powder, 5-10 parts of the crosslinking agent, 1-2 parts of the waterproofing agent and 5-8 parts of the carbon filament fiber, based on weight ratio.

7. The zero-carbon high-fiber eco-friendly plate synthesized from waste circuit board powder as claimed in claim 5, **characterized in that**, the raw material of the eco-friendly plate for pressing comprises: 1-69 parts of the powder recycled from circuit board, 1-70 parts of the wood fiber powder, 1-20 parts of the crosslinking agent, 1-10 parts of the waterproofing agent, 1-8 parts of a fireproofing agent, 1-5 parts of a formaldehyde catching agent, 1-12 parts of the carbon filament fiber, 1-5 parts of a hardening agent and 1-5 parts of an antioxidant, based on weight ratio.

8. The zero-carbon high-fiber eco-friendly plate synthesized from waste circuit board powder as claimed in claim 7, **characterized in that**, the raw material of the eco-friendly plate for pressing comprises: 50-69 parts of the powder recycled from circuit board, 10-20 parts of the wood fiber powder, 5-10 parts of the crosslinking agent, 2-3 parts of the waterproofing agent, 1-3 parts of the fireproofing agent, 2-3 parts of the formaldehyde catching agent, 5-12 parts of the carbon filament fiber, 1.5-2 parts of the hardening agent and 1.5-2 parts of the antioxidant, based on weight ratio.

9. The zero-carbon high-fiber eco-friendly plate synthesized from waste circuit board powder as claimed in claim 7, **characterized in that**, the raw material of the eco-friendly plate for pressing comprises: 40-50 parts of the powder recycled from circuit board, 30-40 parts of the wood fiber powder, 13-20 parts of the crosslinking agent, 3-5 parts of the waterproofing agent, 3-5 parts of the fireproofing agent, 2-3 parts of the formaldehyde catching agent, 7-10 parts of the carbon filament fiber, 1.5-2 parts of the hardening agent and 1.5-2 parts of the antioxidant, based on weight ratio.

10. The zero-carbon high-fiber eco-friendly plate synthesized from waste circuit board powder as claimed in any of claims 7-9, **characterized in that**, the crosslinking agent is urea-formaldehyde resin sol or phenolic resin sol, the waterproof agent is one or more agent selected from the group consisting of paraffin wax, silicone oil, white oil and palm wax, the fireproofing agent is one or more agent selected from the group consisting of ammonium chloride, potassium carbonate and ammonium dihydrogen phosphate, the formaldehyde catching agent is one or more agent selected from the group consisting of montmorillonite, melamine and phenol, the carbon filament fiber is a glass fiber, the hardening agent is one or more agent selected from the group consisting of ammonium chloride, oxalic acid, phenolic aldehyde amine, polyether amine and arylated alkyl amine, the antioxidant is one or more agent selected from the group consisting of arylated alkyl amine antioxidant, phenolic antioxidant, thioester and phosphite ester.
